# EUROPEAN PATENT APPLICATION

(11) **EP 4 679 350 A1**
(43) Date of publication of application: **14.01.2026**
(21) Application number: 23926274.4
(22) Date of filing: 08.03.2023
(51) Int. Cl.: G06Q 40/03

(54) **TERMINAL, CONTROL METHOD FOR TERMINAL, STORAGE MEDIUM, AND SYSTEM**

(71) Applicant: NEC Corporation, 108-8001 Tokyo (JP)
(72) Inventor: WANG Ying, Tokyo 108-8001 (JP); HIGUCHI Yuya, Tokyo 108-8001 (JP); YOKOTA Haruki, Tokyo 108-8001 (JP); IWAHORI Yasufumi, Tokyo 108-8001 (JP); HOSAKA Yoshifumi, Tokyo 108-8001 (JP); SAWADA Megumi, Tokyo 108-8001 (JP); IIDA Hiroaki, Tokyo 108-8001 (JP)
(74) Representative: Betten & Resch
(86) International application number: PCT/JP2023/008751
(87) International publication number: WO 2024/185061

(57) **Abstract**

To provide a terminal, which contributes to enabling a service provider to more accurately determine whether or not to provide a service to a user. The terminal includes a calculation means and a transmission means. The calculation means calculates a reliability score, which is a score indicating a trust level of a user and for determining whether or not a service provider provides a service to the user. The transmission means transmits the calculated reliability score to a business operator terminal of the service provider.

## Description

### [Technical Field]

The present invention relates to a terminal, a control method of a terminal, a storage medium, and a system.

### [Background Art]

A technology related to a digital wallet exists.

For example, Patent Literature 1 describes that a device and a method for using biometric technology are disclosed in order to ensure secure transactions using blockchain technology. In addition, Patent Literature 1 describes that at least some security-related problems in conventional blockchain digital wallets, specifically in blockchain digital wallets that cannot reliably authenticate user identification information, are mitigated. Further, Patent Literature 1 describes that a method and an apparatus for using authentication and data protection in order to implement a blockchain offline wallet using biometric information are presented.

### [Citation List]

### [Patent Literature]

[PTL 1] Japanese Unexamined Patent Application Publication (Translation of PCT Application) No. JP2022-508773

### [Summary of Invention]

### [Technical Problem]

A service provider may request a user to present an identity verification document, a qualification certificate, or the like in the case where the service provider provides a service to the user. In this case, the decision on whether or not to provide the service is often made based on the validity of the identity verification document or the like presented from the user (the digital wallet of the user).

However, a service provider is unable to accurately evaluate the reliability of a user who wishes to receive a service based solely on an identity verification document or the like presented from a digital wallet. That is, the service provider is unable to evaluate the reliability of a service user based only on an identity verification document or the like presented from the digital wallet.

Specifically, the service provider is unable to determine whether the user in front is a trustworthy person based only on personal information (for example, address and age) of the user who wishes to receive the service. Similarly, even if an identity verification document such as a student ID is authentic, the service provider is unable to determine whether the user in front is a trustworthy person.

It is a main object of the present invention to provide a terminal, a control method of a terminal, a storage medium, and a system, which contribute to enabling a service provider to more accurately determine whether or not to provide a service to a user.

### [Solution to Problem]

According to a first aspect of the present invention, there is provided a terminal including: a calculation means that calculates a reliability score, which is a score indicating a trust level of a user and for determining whether or not a service provider provides a service to the user; and a transmission means that transmits the calculated reliability score to a business operator terminal of the service provider.

According to a second aspect of the present invention, there is provided a control method of a terminal, the control method including: calculating a reliability score, which is a score indicating a trust level of a user and for determining whether or not a service provider provides a service to the user; and transmitting the calculated reliability score to a business operator terminal of the service provider.

According to a third aspect of the present invention, there is provided a computer-readable storage medium storing a program causing a computer mounted on a terminal to perform processing for: calculating a reliability score, which is a score indicating a trust level of a user and for determining whether or not a service provider provides a service to the user; and transmitting the calculated reliability score to a business operator terminal of the service provider.

According to a fourth aspect of the present invention, there is provided a system including: a terminal possessed by a user; and a business operator terminal managed by a service provider, and wherein the business operator terminal transmits to the terminal a reliability score calculation rule for calculating a reliability score, which is a score indicating a trust level of the user and is used for determining whether or not the service provider provides a service to the user, and wherein the terminal calculates the reliability score of the user based on the received reliability score calculation rule and transmits the calculated reliability score to the business operator terminal, and wherein the business operator terminal determines whether or not it is possible to provide the service to the user using the received reliability score, and notifies an employee of the service provider of a determination result.

### [Advantageous Effects of Invention]

According to the individual aspects of the present invention, there is provided a terminal, a control method of terminal, a storage medium, and a system are provided, which contribute to enabling a service provider to more accurately determine whether or not to provide a service to a user. The advantageous effect of the present invention is not limited to the above advantageous effect. The present invention may provide other advantageous effects, instead of or in addition to the above advantageous effect.

### [Brief Description of the Drawings]

[Fig. 1] Fig. 1 is a diagram illustrating an outline of an example embodiment.
[Fig. 2] Fig. 2 is a flowchart illustrating an operation of an example embodiment.
[Fig. 3] Fig. 3 is a diagram illustrating an example of a schematic configuration of an information processing system according to a first example embodiment.
[Fig. 4] Fig. 4 is a diagram illustrating an example of a display of a terminal according to the first example embodiment.
[Fig. 5] Fig. 5 is a diagram illustrating an operation of the information processing system according to the first example embodiment.
[Fig. 6] Fig. 6 is a diagram illustrating an example of a processing configuration of the terminal according to the first example embodiment.
[Fig. 7] Fig. 7 is a diagram illustrating an example of a content management database according to the first example embodiment.
[Fig. 8] Fig. 8 is a diagram illustrating an example of a history management database according to the first example embodiment.
[Fig. 9] Fig. 9 is a diagram illustrating an example of a processing configuration of a business operator terminal according to the first example embodiment.
[Fig. 10] Fig. 10 is a diagram illustrating an example of a display of the terminal according to the first example embodiment.
[Fig. 11] Fig. 11 is a sequence diagram illustrating an example of an operation of the information processing system according to the first example embodiment.
[Fig. 12] Fig. 12 is a diagram illustrating an example of a hardware configuration of the terminal according to the present application disclosed.

### [Example Embodiment]

First, an outline of an example embodiment will be described. In the following outline, various components are denoted by reference characters for the sake of convenience. That is, the following reference characters are used as examples to facilitate the understanding of the present invention. Thus, the description of the outline is not intended to impose any limitations. In addition, unless otherwise specified, an individual block illustrated in the drawings represents a configuration of a functional unit, not a hardware unit. An individual connection line between blocks in the drawings signifies both one-way and two-way directions. An arrow schematically illustrates a principal signal (data) flow and does not exclude bidirectionality. In the present description and drawings, elements that can be described in a like way will be denoted by a like reference character, and redundant description thereof will be omitted as needed.

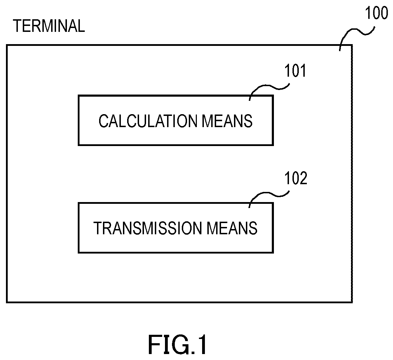

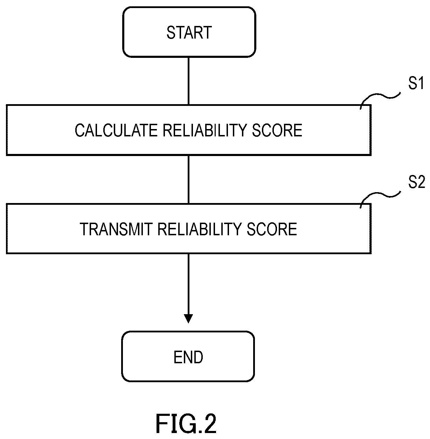

A terminal 100 according to an example embodiment includes a calculation means 101 and a transmission means 102 (see Fig. 1). The calculation means 101 calculates a reliability score, which is a score indicating a trust level of a user and for determining whether or not a service provider provides a service to the user (step S1 in Fig. 2). The transmission means 102 transmits the calculated reliability score to a business operator terminal of the service provider (step S2).

The terminal 100 calculates a reliability score, which is an indicator showing the trust level of the user in the real world. The terminal 100 notifies the service provider of the calculated reliability score. The service provider can determine whether or not to provide a service to the user based on the reliability score. That is, the terminal 100 makes it possible for the service provider to more accurately determine whether or not to provide a service to the user. For example, by calculating the reliability score based on information related to digital contents stored in a digital wallet, the reliability of the user is visualized (quantified). The service provider can objectively determine whether or not to provide a service based on the visualized reliability score. That is, the reliability score calculated by the terminal 20 grants credit to the user.

Hereinafter, specific example embodiments will be described in more detail with reference to drawings.

### [First Example Embodiment]

A first example embodiment will be described in more detail with reference to drawings.

### [System Configuration]

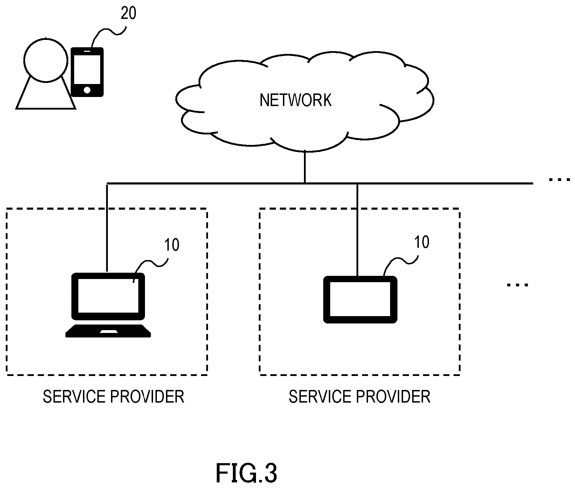

As shown in Fig. 3, an information processing system according to a first example embodiment includes at least one or more service providers.

A service provider is a business operator that provides services to a user. For example, service providers include business operators that operate transportation means such as railways, buses, or airplanes. Alternatively, business operators such as retail stores or restaurants correspond to service providers.

Alternatively, service providers include real estate management companies that provide rental services such as apartments, consumer finance companies that provide loans to individuals, and rental business operators that offer lending services for automobiles or the like. Alternatively, service providers include companies or the like that hire employees and develop business operations. The service providers are not limited to private companies, and public institutions such as municipal offices or organizations such as NGOs (Non-Governmental Organizations) and NPOs (Non-Profit Organizations) are also included as the service providers in the present application disclosed.

A service provider may request a user to present a certificate in accordance with business or the like of own company (own organization). For example, a rental business operator that lends automobiles to users or a consumer finance company may request the user to present an identity verification document. Alternatively, a retail store that sells tobacco, alcohol, or the like to users may request the user to present a certificate capable of verifying age. Alternatively, a company or the like that provides internship opportunities to students may request the presentation of a certificate or the like related to qualifications held by the student.

Each service provider includes a business operator terminal 10 that is used in providing services to a user. That is, the business operator terminal 10 is a terminal that is managed by the service provider.

The business operator terminal 10 may be a terminal such as a personal computer, a tablet-type terminal, or a POS (Point of Sale) terminal. It should be noted that the service provider may include a server for providing a service to the user (not shown in Fig. 3 or the like).

An employee or the like of the service provider operates the business operator terminal 10 to provide a service to the user.

The user possesses a terminal 20.

Each apparatus shown in Fig. 3 is connected to a network. Specifically, the business operator terminal 10 and the terminal 20 are connected to the network by means of wired or wireless communication.

The configuration of the information processing system shown in Fig. 3 is an example, and is not intended to limit the configuration. For example, each service provider may include a plurality of business operator terminals 10.

### [Schematic Operation]

Next, a schematic operation of the information processing system according to the first example embodiment will be described.

### <Preparation of Digital Wallet>

The terminal 20 of the user includes a digital wallet function. The digital wallet is an electronic information storage service in which information security such as data integrity, reliability, and availability is ensured. Although self-sovereign management of the digital wallet is desirable, an entity other than the user themself may serve as the managing entity.

The user installs an application for implementing a digital wallet on the terminal 20 that the user possess. By opening a digital wallet on the terminal 20, the user is able to store various digital contents in the terminal 20, such as electronic money, student IDs, identity verification documents such as passports or driver's licenses, membership cards, various ticket information such as airline tickets or boarding passes, and vaccination certificates.

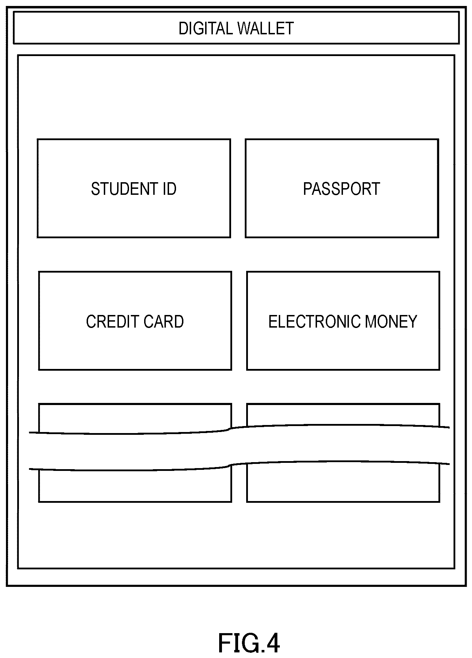

For example, the terminal 20 of the user stores digital contents as shown in Fig. 4. Among the digital contents stored in the terminal 20 are official identity verification documents such as a passport or a driver's license, and a student ID issued by a university.

### <Reception of Service>

A user who wishes to receive a service from a service provider makes a request to that effect to an employee or the like of the service provider. In response to the request, an employee or the like of the service provider operates the business operator terminal 10 to enable communication between the terminal 20 of the user and the business operator terminal 10. For example, the terminal 20 and the business operator terminal 10 are connected by means of short-range wireless communication such as Bluetooth (registered trademark) or NFC (Near Field Communication). Alternatively, the terminal 20 and the business operator terminal 10 may be connected by using mobile communication such as 4G (4th Generation) or 5G (5th Generation), or wireless LAN such as Wi-Fi (Wireless Fidelity).

In a case where the terminal 20 and the business operator terminal 10 are connected, the business operator terminal 10 requests the terminal 20 to provide a "reliability score" related to the user who wishes to receive a service.

The reliability score is an index indicating the level of trust in the user in real society. For example, a user who possesses identity verification documents such as a student ID or a passport is determined to have a predetermined level of trust. Alternatively, a user who frequently delays the return of rented items such as a rental car, or frequently delays loan repayments, is determined to have a low level of trust.

The service provider determines whether or not to provide a service to the user (the user who wishes to receive the service) based on the reliability score provided from the terminal 20. The service provider refuses to provide the service to a user whose reliability score is lower than a threshold value predetermined by the own company.

Here, the criteria (contents) for calculating the reliability score differ for each service provider. For example, in a case where the provision of a service is completed upon the completion of a product transaction, as in a retail store, the level of trust required of the user is low. In this case, for example, the retail store determines that it is sufficient if the user possesses an identity verification document or a credit card.

In contrast, in the case of a service provider such as a rental business operator or a consumer finance company, in which the provision of a service is completed by collecting a rental item or a loan, the level of trust required of the user is high. In this case, for example, a rental business operator requires the user not only to possess an identity verification document but also to have used the identity verification document a plurality of times or the like. Similarly, the level of trust required of a user by a service provider that offers rental services such as apartments is also high. A real estate management company or the like requires that the identity verification document has been used a plurality of times.

As described above, depending on the type of business or the way of thinking (the policy) of the service provider, each service provider has a different method (calculation criteria) for calculating the reliability score for a service user (a user who receives a service). Therefore, the service provider notifies the terminal 20 of a reliability score calculation rule that corresponds to a policy or the like of own company. That is, since the items that are emphasized differ for each service business operator, a criterion (reliability score calculation rule) corresponding to the item emphasized by each service business operator is transmitted to the terminal 20.

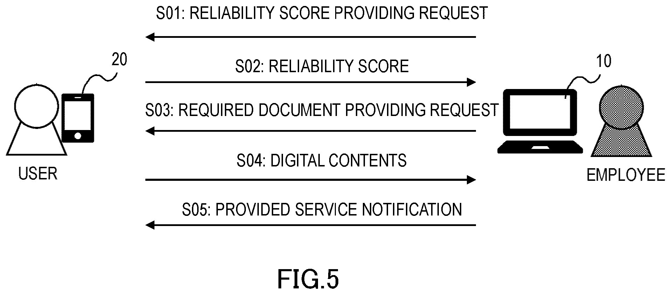

Specifically, the business operator terminal 10 transmits a "reliability score providing request" including a reliability score calculation rule (hereinafter sometimes simply referred to as a calculation rule) to the terminal 20 (step S01 in Fig. 5).

In response to receiving the reliability score providing request, the terminal 20 calculates a reliability score of the user. For example, the terminal 20 calculates the reliability score using the holding status or the usage history or the like of the digital contents stored in the digital wallet.

The terminal 20 stores, for each digital content stored in the digital wallet, holding status including type (for example, a student ID, a passport, a credit card or the like), number of items, holding period, or the like. In addition, the terminal 20 stores content usage history related to each digital content. The terminal 20 calculates the reliability score based on the holding status and the usage history of the digital contents, and the calculation rule acquired from the service provider.

The terminal 20 transmits the calculated reliability score to the business operator terminal 10 (step S02).

The business operator terminal 10 determines whether or not a service can be provided to the user in front, based on the acquired reliability score. For example, the business operator terminal 10 determines the service availability based on the result of threshold processing using the reliability score.

In a case where service provision is determined to be impossible, the business operator terminal 10 notifies an employee or the like of the service provider to that effect. The employee or the like of the service provider informs the user in front that the service cannot be provided.

In a case where service provision is determined to be possible, the business operator terminal 10 notifies an employee or the like of the service provider to that effect. The employee or the like of the service provider provides the service to the user in front. For example, an employee or the like of a retail store sells a product and performs payment processing. Alternatively, an employee or the like of a rental business operator lends out a rental item.

It should be noted that an employee or the like of the service provider may also request the terminal 20 to provide information necessary for providing the service to the user at the time of providing the service to the user.

For example, an employee or the like of a retail store requests the user (the terminal 20 of the user) who purchases an age-restricted item such as tobacco or alcohol to provide an identity verification document such as a driver's license. Alternatively, a car rental business operator requests the user to provide a membership card of own company, a driver's license, an identity verification document, or the like.

In this case, the business operator terminal 10 transmits a "required document providing request" to the terminal 20, the request including information or the like for identifying a document (such as a certificate) necessary for providing the service (for example, the name of an identity verification document), in response to an operation by an employee or the like, or automatically (step S03).

Upon receiving the required document providing request, the terminal 20 transmits to the business operator terminal 10 the digital contents (such as a certificate) stored in the digital wallet that is specified by the service provider (step S04).

After the service provider completes the provision of the service, the employee or the like inputs that fact into the business operator terminal 10. The business operator terminal 10 notifies the terminal 20 of details of the service provided to the user. The business operator terminal 10 transmits a "provided service notification" including detailed information of the service provided to the user to the terminal 20 (step S05).

For example, the business operator terminal 10 notifies the terminal 20 of the name of the service provider, the type of business of the service provider, the name of the product (service) sold, the document used for providing the service, the payment method, and special notes (remarks) or the like.

In a case where a provided service notification is received, the terminal 20 stores detailed information of the provided service included in the notification in a history management database. The terminal 20 updates the usage history of the digital contents by using the information included in the provided service notification. In addition, the terminal 20 creates and updates a usage history related to the service received by the user (service usage history) by using the information included in the provided service notification. It should be noted that details of the history management database will be described below.

Next, details of the individual apparatuses included in the information processing system according to the first example embodiment will be described.

### [Terminal]

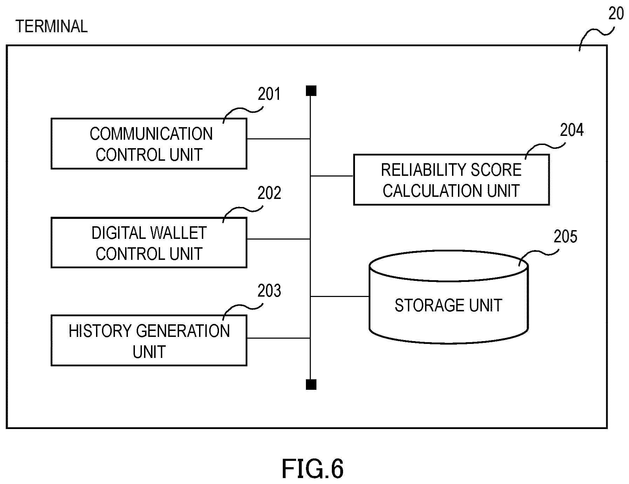

Fig. 6 is a diagram illustrating an example of a processing configuration (processing modules) of the terminal 20 according to the first example embodiment. Referring to Fig. 6, the terminal 20 includes a communication control unit 201, a digital wallet control unit 202, a history generation unit 203, a reliability score calculation unit 204, and a storage unit 205.

The communication control unit 201 is means for controlling communication with other apparatuses. For example, the communication control unit 201 receives data (packets) from the business operator terminal 10. In addition, the communication control unit 201 transmits data to the business operator terminal 10. The communication control unit 201 gives data received from other apparatuses to other processing modules. The communication control unit 201 transmits data acquired from other processing modules to other apparatuses. In this way, other processing modules transmit and receive data to and from other apparatuses via the communication control unit 201. The communication control unit 201 includes a function as a receiving unit that receives data from other apparatuses and a function as a transmitting unit that transmits data to other apparatuses.

The communication control unit 201 communicates with the business operator terminal 10 using short-range wireless communication means such as Bluetooth (registered trademark) or NFC (Near Field Communication).

The digital wallet control unit 202 is means for managing and controlling the digital wallet. Descriptions regarding installation of the digital wallet application and acquisition of digital contents will be omitted. This is because installation of the digital wallet application and acquisition of digital contents or the like are obvious to those skilled in the art.

The digital wallet control unit 202 holds, as contents of the digital wallet, electronic money, airline tickets, identity verification documents, credit cards, membership cards, or the like.

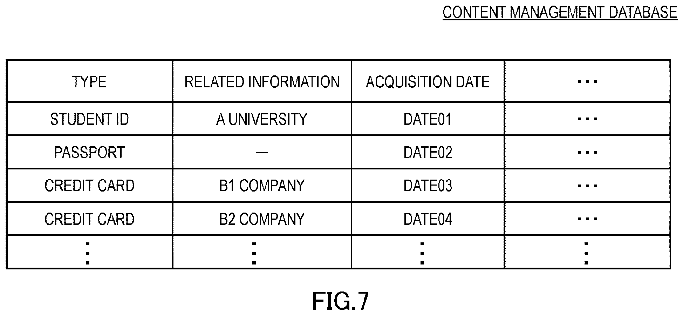

In a case where the digital wallet control unit 202 has stored digital contents such as identity verification documents in the digital wallet, the digital wallet control unit 202 stores information of the stored digital contents in a content management database (see Fig. 7). The digital wallet control unit 202 manages a holding status of each piece of digital content using the content management database.

As shown in Fig. 7, the content management database stores the type of each digital content, related information of each content (for example, an issuing entity of a certificate or the like), the acquisition date of the digital content (the date of storage into the digital wallet), or the like. It should be noted that the content management database shown in Fig. 7 is an example, and is not intended to limit the items to be stored or the like.

Further, the digital wallet control unit 202 processes a required document providing request received from the business operator terminal 10. The digital wallet control unit 202 reads, from the digital wallet, a document specified by the service provider (information for specifying the digital content included in the required document providing request; for example, a document name).

In a case where the specified document (digital content) is read, the digital wallet control unit 202 transmits a positive response including the read document to the business operator terminal 10.

In a case where the specified document is not stored in the digital wallet, the digital wallet control unit 202 transmits a negative response indicating that fact to the business operator terminal 10.

The history generation unit 203 is means for generating a content usage history and a service usage history. The history generation unit 203 processes a provided service notification received from the business operator terminal 10. The history generation unit 203 creates and updates the content usage history and the service usage history based on the information included in the provided service notification.

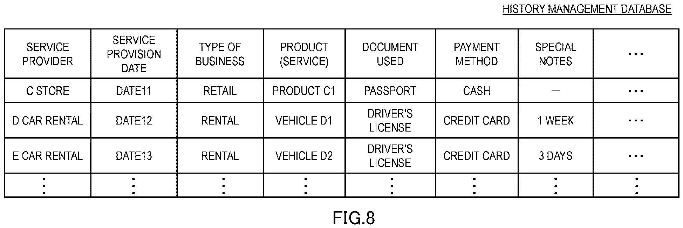

In a case where the provided service notification is received, the history generation unit 203 adds a new entry to a history management database (see Fig. 8). The history generation unit 203 stores the information included in the provided service notification in the added entry.

As shown in Fig. 8, the history management database stores content usage history (such as a document used and the service provision date). The history management database also stores service usage history (such as the name of the service provider, the service provision date, the type of business, the name of the product (service), the payment method, and special notes or the like).

It should be noted that special notes may include a rental period, a rental start date of a rental item, or the like. Alternatively, the special notes may include a loan amount or a loan period provided by a consumer finance business operator. The history management database shown in Fig. 8 is an example, and is not intended to limit the items to be stored or the like.

The reliability score calculation unit 204 is means for calculating a reliability score. The reliability score calculation unit 204 calculates a reliability score, which is a score indicating the trust level of the user, and is used by the service provider to determine whether or not to provide a service to the user.

The reliability score calculation unit 204 processes a reliability score providing request received from the business operator terminal 10. The reliability score calculation unit 204 calculates the reliability score based on a reliability score calculation rule included in the reliability score providing request and information related to digital contents held by the user.

For example, as a reliability score calculation rule, a rule such as "10 points are awarded for possession of one identity verification document, and the total number of points for each identity verification document is used as the reliability score" is exemplified. In this case, the reliability score calculation unit 204 refers to the content management database (holding status of contents) and calculates the reliability score based on the holding status of identity verification documents among the digital contents stored in the digital wallet.

Alternatively, as a reliability score calculation rule, a rule such as "if the number of times each identity verification document has been used within the past one year is 10 times or more, 10 points are awarded per document, and the total number of points for each identity verification document is used as the reliability score" is exemplified. In this case, the reliability score calculation unit 204 refers to the history management database and counts the number of identity verification documents used during the period of one year from the reception date of the reliability score providing request. The reliability score calculation unit 204 determines whether or not the number of uses of each identity verification document is 10 times or more, and calculates the number of points for each document. The reliability score calculation unit 204 adds the number of points for each identity verification document and calculates the total number of points as the reliability score.

Alternatively, as a reliability score calculation rule, a rule such as "10 points are awarded if the number of credit card payments in the past one year is 20 or more, and 10 points are awarded if the number of electronic money payments is 40 or more, and the total number of points is used as the reliability score" is exemplified. In this case, the reliability score calculation unit 204 refers to the history management database and counts the number of payments made using a credit card or electronic money during the period of one year from the reception date of the reliability score providing request. The reliability score calculation unit 204 calculates the number of points for each payment method and calculates the total number of points as the reliability score.

It should be noted that the reliability score calculation rule may use the type, number, number of times of use, usage frequency, most recent usage date, holding period, or the like of certificates stored in the digital wallet. For example, by calculating the reliability score based on the number of times of use of digital contents (the number of times the contents are provided to service providers), the usage frequency, the most recent usage date, or the like, circumstantial evidence is obtained that the user (the holder of the certificate or the digital wallet) has earned trust repeatedly in real society.

As described above, the reliability score calculation unit 204 calculates the reliability score based on at least one of the holding status of digital contents, the usage history of digital contents, and the usage history of services received by the user.

It should be noted that the reliability score may be calculated using two or more among the holding status of digital contents, the usage history of digital contents, and the usage history of services received by the user. For example, the reliability score may be a total value of a reliability score (points) calculated from the holding status of digital contents and a reliability score calculated from the usage status of digital contents.

The reliability score calculation unit 204 transmits the calculated reliability score to the business operator terminal 10. It should be noted that, for example, in a case where no identity verification document designated by the service provider exists, or in a case where the designated identity verification document has not been used during a predetermined period, "0 points" may be notified as the reliability score to the service provider.

As described above, the reliability score calculation unit 204 calculates the reliability score based on the holding status of digital contents stored in the digital wallet. Alternatively, the reliability score calculation unit 204 calculates the reliability score based on the usage history of digital contents stored in the digital wallet. Alternatively, the reliability score calculation unit 204 calculates the reliability score based on the usage history of services provided using the digital contents stored in the digital wallet.

The storage unit 205 is means for storing information necessary for the operation of the terminal 20.

### [Business Operator Terminal]

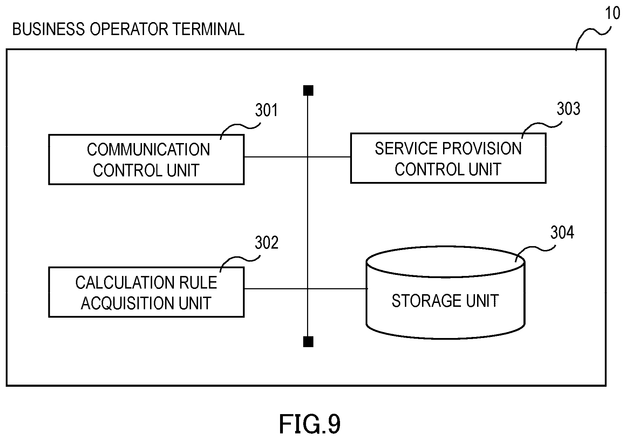

Fig. 9 is a diagram illustrating an example of a processing configuration (processing modules) of the business operator terminal 10 according to the first example embodiment. Referring to Fig. 9, the business operator terminal 10 includes a communication control unit 301, a calculation rule acquisition unit 302, a service provision control unit 303, and a storage unit 304.

The communication control unit 301 is means for controlling communication with other apparatuses. For example, the communication control unit 301 receives data (packets) from the terminal 20. In addition, the communication control unit 301 transmits data to the terminal 20. The communication control unit 301 gives data received from other apparatuses to other processing modules. The communication control unit 301 transmits data acquired from other processing modules to other apparatuses. In this way, other processing modules transmit and receive data to and from other apparatuses via the communication control unit 301. The communication control unit 301 includes a function as a receiving unit that receives data from other apparatuses and a function as a transmitting unit that transmits data to other apparatuses.

The communication control unit 301 communicates with the terminal 20 using short-range wireless communication means such as Bluetooth (registered trademark) or NFC (Near Field Communication).

The calculation rule acquisition unit 302 is means for performing control related to the acquisition of a reliability score calculation rule. The calculation rule acquisition unit 302 acquires the reliability score calculation rule using a GUI (Graphical User Interface) or the like.

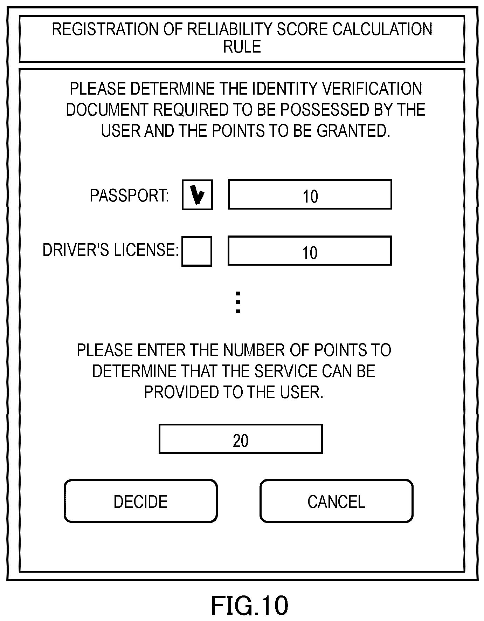

For example, the calculation rule acquisition unit 302 acquires a reliability score calculation rule and a threshold for determining whether or not to provide a service to the user, by using a GUI (Graphical User Interface) as shown in Fig. 10. The calculation rule acquisition unit 302 stores the acquired reliability score calculation rule and the threshold in the storage unit 304.

In this manner, the calculation rule acquisition unit 302 acquires information such as the items used in calculating the reliability score and the weighting distributions (number of points assigned to each item).

It should be noted that the calculation rule acquisition unit 302 may acquire the calculation rule and the threshold using an external storage medium such as a USB (Universal Serial Bus) memory. A person in charge of the service provider or the like may determine the reliability score calculation rule and the threshold, and store this information in a USB memory.

The service provision control unit 303 is means for performing control related to the service provided to the user.

The service provision control unit 303 connects the terminal 20 and the business operator terminal 10 by means of short-range wireless communication in response to an operation by an employee or the like of the service provider. For example, the service provision control unit 303 performs pairing via Bluetooth (registered trademark). Alternatively, the service provision control unit 303 controls an NFC card reader.

In a case where the terminal 20 and the business operator terminal 10 become capable of communicating, the service provision control unit 303 transmits a reliability score providing request including a reliability score calculation rule to the terminal 20.

The service provision control unit 303 receives the reliability score calculated by the terminal 20 as a response to the reliability score providing request.

The service provision control unit 303 determines whether or not the service can be provided to the user in front based on the received reliability score. Specifically, the service provision control unit 303 performs the above determination in accordance with the result of threshold processing using the reliability score and the threshold acquired by the calculation rule acquisition unit 302.

In a case where the reliability score is smaller than the threshold, the service provision control unit 303 notifies a staff member or the like of the service provider that the service cannot be provided to the user in front.

In a case where the reliability score is equal to or greater than the threshold, the service provision control unit 303 notifies a staff member or the like of the service provider that the service can be provided to the user in front.

In addition, in a case where provision of the service to the user is possible, the service provision control unit 303 requests the terminal 20 to provide documents necessary for the service to be provided, in response to an operation by an employee or the like of the service provider or automatically.

For example, in a case where tobacco or the like has been sold to the user, the service provision control unit 303 requests the terminal 20 to provide an identity verification document capable of age verification. Alternatively, in a case where a rental car or the like is lent, the service provision control unit 303 requests the terminal 20 to provide a driver's license, a membership card, or the like.

The service provision control unit 303 transmits a required document providing request to the terminal 20, the request including information for specifying the required documents (such as a certificate or a membership card) to be provided by the user.

The service provision control unit 303 receives a response (positive response, negative response) to the required document providing request.

In a case where the requested required document is obtained (a positive response is received), the service provision control unit 303 presents the obtained required document to an employee or the like of the service provider. The employee or the like confirms the presented required document and provides the service to the user. For example, in a case where the user attempts to purchase an age-restricted product, the availability of the product for sale is determined based on the age obtained from the identity verification document.

The service provision control unit 303 notifies the terminal 20 of details related to the service provided to the user, in response to an operation by an employee or the like of the service provider, or automatically. For example, the service provision control unit 303 transmits a provided service notification including service detail information such as its own name, business type, name of the product sold, document used for providing the service, and payment method to the terminal 20.

It should be noted that detailed descriptions regarding documents or the like required for individual service provision will be omitted. This is because documents or the like specific to each service are not relevant to the purpose of the present application disclosed.

The storage unit 304 is means for storing information necessary for the operation of the business operator terminal 10.

### [Operation of System]

Next, the operation of the information processing system according to the first example embodiment will be described.

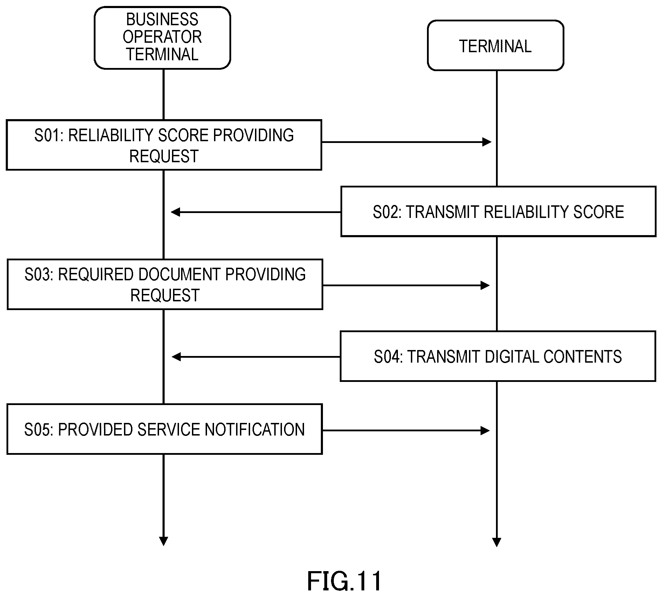

Fig. 11 is a sequence diagram illustrating an example of the operation of the information processing system according to the first example embodiment. Referring to Fig. 11, the operation of the information processing system according to the first example embodiment will be described.

The business operator terminal 10 transmits a "reliability score providing request" to the terminal 20 of a user who desires to receive a service (step S01).

The terminal 20 calculates a reliability score based on the acquired reliability score calculation rule, the holding status of digital contents, the usage history, or the like. The terminal 20 transmits the calculated reliability score to the business operator terminal 10 (step S02).

As described above, the business operator terminal 10 transmits a reliability score calculation rule to the terminal 20, the rule being used to calculate a reliability score, which is a score indicating the trust level of the user and is used for determining whether or not the service provider provides a service to the user. The terminal 20 calculates a reliability score of the user based on the received reliability score calculation rule and transmits the calculated reliability score to the business operator terminal 10.

The business operator terminal 10 determines whether or not it is possible to provide a service to the user in front using the reliability score, and notifies an employee or the like of the service provider of the result. Further, the business operator terminal 10 requests the terminal 20 of the user to provide documents required for the service provision (required document providing request; step S03).

The terminal 20 transmits, from among the digital contents stored in the digital wallet, the digital contents specified by the business operator terminal 10 to the business operator terminal 10 (step S04).

In a case where the service provider finishes providing the service, the business operator terminal 10 transmits a "provided service notification" including detailed information of the provided service to the terminal 20 (step S05).

As described above, in a case where it is determined, based on the reliability score, that the service can be provided to the user, the business operator terminal 10 requests the terminal 20 to provide a document necessary for providing the service to the user. The terminal 20, in response to the request, transmits the digital contents specified by the business operator terminal 10, from among the digital contents stored in the digital wallet, to the business operator terminal 10. Further, in a case where the service provider completes the service provision, the business operator terminal 10 transmits details of the service provided to the user to the terminal 20.

Next, variations according to the first example embodiment will be described.

### <Variation 1>

The business operator terminal 10 may verify the authenticity of a certificate or the like acquired from the terminal 20. For example, the terminal 20 performs personal identification using a My Number Card or the like at the time of opening the digital wallet. The terminal 20 stores biometric information (for example, a face image) of the user who has successfully undergone personal identification, as biometric information of the digital wallet holder. The terminal 20 transmits, along with the required documents, the biometric information of the digital wallet holder to the business operator terminal 10 at the time of providing the required documents. The business operator terminal 10 captures an image of the user in front to acquire biometric information, and performs authentication processing using the acquired biometric information and the biometric information of the digital wallet holder. In a case where the authentication processing is successful, the business operator terminal 10 may determine that the service can be provided to the user. That is, unless authentication of the user is successful, the service is not provided to the user.

### <Variation 2>

In addition to or instead of the start of service provision to the user by the service provider, the business operator terminal 10 may transmit a provided service notification to the terminal 20 at the time of completion of the service provision. For example, in a case where a rental item such as a rental car is returned, the provided service notification may be transmitted to the terminal 20. In this case, the provided service notification may include an evaluation of the user who received the service or information for evaluating the user. For example, a user who returned a rental item without delay may be given a "good" evaluation, and a user who returned a rental item late may be given a "bad" evaluation. Alternatively, the number of days of delay in returning the rental item may be transmitted to the terminal 20.

In such a case, the service provider may set a reliability score calculation rule related to the evaluation of the user. For example, the service provider gives a positive point to an evaluation of "good" and a negative point to an evaluation of "bad."

Alternatively, the service provider may set a reliability score calculation rule that uses the number of days or the number of times of delay in returning rental items. For example, a rental business operator may set a reliability score calculation rule such that the reliability score becomes negative for a user with a large number of days of delay in returning rental items within a given period. Alternatively, the rental business operator may set a reliability score calculation rule such that the reliability score becomes negative for a user with a large number of times of delay in returning rental items within a given period.

As described above, the service provider may set a reliability score calculation rule that is calculated based on the service provision status of peer companies (service usage history of peer companies).

### <Variation 3>

The service provider may determine the content of the service to be provided, the content of benefits to be given to the user, or the like, in addition to or instead of using the reliability score to determine whether or not to provide the service. For example, a restaurant or the like may give priority to accepting reservations from users with a high reliability score. Alternatively, a restaurant or the like may require advance payment from users with a low reliability score. Alternatively, a retail store may provide many benefits to users with a high reliability score (for example, large discounts, substantial points, coupons, or the like).

As described above, the terminal 20 according to the first example embodiment calculates a reliability score based on information related to the digital contents stored in the digital wallet and a reliability score calculation rule acquired from the service provider. For example, the terminal 20 calculates a reliability score based on the holding status of digital contents (such as the type, number, and holding period of certificates) and the usage history of digital contents (such as the number of times of use and frequency of use). The terminal 20 presents the calculated reliability score to the service provider. As a result, the reliability of the user is visualized, and the service provider is able to determine whether or not to provide the service to the user based on an objective indicator.

In addition, the calculation criteria and rules for the reliability score normally differ for each service provider. Therefore, the service provider sets a reliability score calculation rule, in accordance with business category and policy of own company, in the business operator terminal 10. Each time the user desires to receive a service, the business operator terminal 10 transmits the reliability score calculation rule to the terminal 20 of the user. The terminal 20 generates a reliability score based on the acquired reliability score calculation rule and provides the generated reliability score to the service provider. As a result, a reliability score tailored to the evaluation standards (evaluation axes) that differ among service providers is provided to the service provider.

Further, the information provided by the terminal 20 to the service provider is a numerical value in the form of a reliability score, and personal information such as the name and gender is not provided to the service provider. Therefore, personal privacy or the like is appropriately protected.

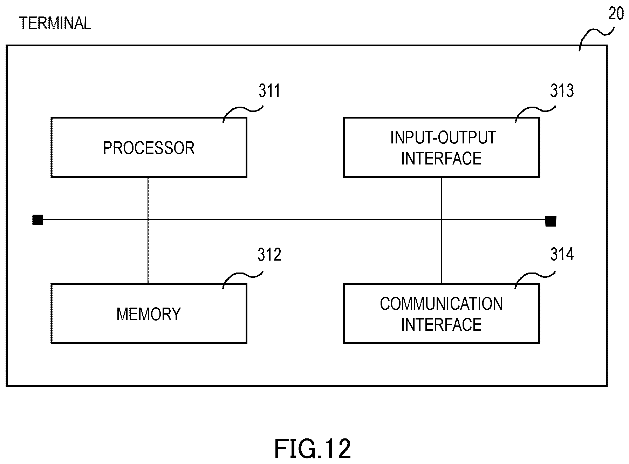

Next, a hardware configuration of an individual apparatus that constitutes the information processing system will be described. Fig. 12 is a diagram illustrating an example of the hardware configuration of the terminal 20.

The terminal 20 can be configured by an information processing apparatus (so-called computer) and includes a configuration illustrated as an example in Fig. 12. For example, the terminal 20 includes a processor 311, a memory 312, an input-output interface 313, a communication interface 314, or the like. The above-described components such as the processor 311 are connected via an internal bus or the like and are configured to be capable of communicating with each other.

However, the configuration shown in Fig. 12 is not intended to limit the hardware configuration of the terminal 20. The terminal 20 may include hardware not illustrated in the figure, and may omit the input-output interface 313 as needed. In addition, the number of components such as the processor 311 included in the terminal 20 is not intended to be limited to the example shown in Fig. 12, and, for example, a plurality of processors 311 may be included in the terminal 20.

For example, the processor 311 is a programmable device such as a CPU (Central Processing Unit), an MPU (Micro Processing Unit), or a DSP (Digital Signal Processor). Alternatively, the processor 311 may be a device such as an FPGA (Field Programmable Gate Array) or an ASIC (Application Specific Integrated Circuit). The processor 311 executes various kinds of programs including an operating system (OS).

The memory 312 is a RAM (Random Access Memory), a ROM (Read-Only Memory), an HDD (Hard Disk Drive), an SSD (Solid State Drive), or the like. The memory 312 stores an OS program, an application program, and various kinds of data.

The input-output interface 313 is an interface for a display apparatus and an input apparatus, which are not illustrated. The display apparatus is, for example, a liquid crystal display or the like. The input apparatus is, for example, an apparatus such as a keyboard or a mouse that receives user operations.

The communication interface 314 is a circuit, module, or the like that performs communication with other apparatuses. For example, the communication interface 314 includes a NIC (Network Interface Card) or the like.

The functions of the terminal 20 are realized by various kinds of processing modules. The processing modules are realized, for example, by causing the processor 311 to execute a program stored in the memory 312. In addition, this program can be recorded in a computer-readable storage medium. The storage medium may be a non-transient (non-transitory) storage medium, such as a semiconductor memory, a hard disk, a magnetic recording medium, or an optical recording medium. That is, the present invention can be embodied as a computer program product. In addition, the above program may be updated by downloading a program via a network or by using a storage medium in which a program is stored. Furthermore, the above processing modules may be realized by semiconductor chips.

It should be noted that the business operator terminal 10, like the terminal 20, can also be configured by an information processing apparatus, and its basic hardware configuration is not different from that of the terminal 20, so description thereof will be omitted.

The terminal 20, which is an information processing apparatus, includes a computer, and the functions of the terminal 20 can be implemented by causing the computer to execute a program. In addition, the terminal 20 executes a control method of the terminal 20 by using the program. Similarly, the business operator terminal 10 includes a computer, and the functions of the business operator terminal 10 can be implemented by causing the computer to execute a program. In addition, the business operator terminal 10 executes a control method of the business operator terminal 10 by using this program.

### [Variations]

It should be noted that the configurations, operations, and the like of the information processing system according to the above example embodiment are examples and are not intended to limit the configuration or the like of the system.

In the above example embodiment, the case has been described in which a reliability score calculation rule is transmitted from the business operator terminal 10 to the terminal 20 at the time a service is provided to a user. However, the reliability score calculation rule may be set in advance in the terminal 20. For example, a plurality of reliability score calculation rules may be preset in the terminal 20, and the business operator terminal 10 may specify a calculation rule to be adopted by its own company from among the preset reliability score calculation rules. That is, the business operator terminal 10 may specify a reliability score calculation rule to be adopted by its own company from among a plurality of reliability score calculation rules preset in the terminal 20, and may request the provision of a reliability score.

The service provider may prepare a plurality of reliability score calculation rules from different perspectives and may transmit the plurality of reliability score calculation rules to the terminal 20. For example, the business operator terminal 10 transmits five types of reliability score calculation rules to the terminal 20. The terminal 20 calculates a reliability score for each of the five types of calculation rules and transmits the scores to the business operator terminal 10. The business operator terminal 10 may determine whether or not to provide a service to the user using the reliability scores generated from the five types of calculation rules.

In addition, the service provider may adopt a reliability score calculation rule that has been prepared in advance by a management association or the like composed of peer companies. In this case, each service provider may determine a threshold or the like of the reliability score calculation rule in accordance with its own company's security policy or the like. That is, the reliability score calculation rule may be standardized among a plurality of service providers, and each service provider may determine a threshold used in a case where a determination of "service provision possible" is made.

The business operator terminal 10 may transmit, as a reliability score calculation rule, a function for outputting a reliability score to the terminal 20. That is, the business operator terminal 10 may transmit a calculation algorithm of a reliability score to the terminal 20. In addition, the business operator terminal 10 may determine a calculation algorithm that matches its own company's policy or the like from among a plurality of calculation algorithms, and transmit the determined calculation algorithm to the terminal 20 as a reliability score calculation rule.

As shown in Fig. 5, in the above example embodiment, the case has been described in which the business operator terminal 10 requests the reliability score and the submission of the required documents from the terminal 20 at different timings. However, the business operator terminal 10 may request the reliability score and the required documents at the same timing. In this case, the business operator terminal 10 may transmit a reliability score provision request including the reliability score calculation rule and information specifying the required documents to the terminal 20. The terminal 20 may transmit the calculated reliability score and the specified required documents to the business operator terminal 10.

The business operator terminal 10 may transmit, as a reliability score calculation rule, a learning model that outputs a reliability score in response to an input of content holding status or content usage history to the terminal 20. The learning model is obtained by machine learning using a large number of training data.

The reliability score may be calculated using not only the information stored in the terminal 20 (such as content holding status, content usage history, and service usage history), but also information obtained from external organizations or associations. For example, the reliability score calculation rule may use information obtained from a credit card company for calculation. For example, the reliability score may be calculated based on the usage history of a credit card. For example, a reliability score calculation rule may be set such that a user who has a history of payment delays or the like is assigned a lower reliability score. In this way, the service provider may determine whether or not to provide a service based on the usage status (payment status) of the user's credit card in cooperation with the credit card company.

The terminal 20 may present (notify) the user of the reliability score calculation rule acquired from the business operator terminal 10 and the reliability score calculated based on the calculation rule. By referring to the notified reliability score calculation rule, the user can recognize which content stored in the digital wallet was used for the calculation of the reliability score.

The terminal 20 may obtain consent from the user regarding the submission of the calculated reliability score before transmitting the reliability score to the business operator terminal 10. The terminal 20 may provide the reliability score to the service provider only in a case where the user has agreed to the submission of the reliability score.

Similarly, the terminal 20 may obtain consent from the user regarding the submission of the required documents (digital content) before transmitting the required documents to the business operator terminal 10 for the service provider to provide a service.

The business operator terminal 10 may notify the terminal 20 that the service will not be provided to the user based on the reliability score, in a case where it is determined that the service should not be provided. At that time, the business operator terminal 10 may notify the terminal 20 of the reason why the service cannot be provided to the user. For example, the business operator terminal 10 may notify the terminal 20 that the number of uses of an identity verification document has not reached a criterion (threshold) specified by the service provider. Alternatively, the business operator terminal 10 may notify the terminal 20 of advice or the like related to actions or measures necessary for the user to receive the service. For example, in a case where the reason why the service is not available is that there have been many delays in returning rental items, the business operator terminal 10 may transmit to the terminal 20 advice such as returning the rental items on time.

Information regarding reliability score calculation rules and required documents that each service provider requests from users may be published on a website or the like that compiles information related to each industry (service). The terminal 20 may acquire information such as the reliability score calculation rule or the required documents from the website or the like instead of acquiring such information from the business operator terminal 10. Alternatively, information such as the above-described reliability score or required documents may be registered in advance in an application installed in the terminal 20. With such a configuration, the user is able to know in advance the policy of each service provider (service) (the strictness of the calculation rule), the type of certificate required, the status of the usage history, and the like required to receive the service. The user is able to consider (decide) whether or not to receive a service from the service provider after understanding the policy or the like of the service provider in advance. In a case where the user decides to use the service provider without knowing the information required by the service provider, and then is asked to provide unexpected information, the user will be delayed in receiving the service. Therefore, if the user is able to understand in advance the information required by the service provider, the user can prepare for the accumulation of required history or prepare the required certificates. Alternatively, if the user is able to understand in advance the information required by the service provider, the user can also decide to decline or withhold the receipt of the service from the service provider.

Some functions of the terminal 20 may be implemented in another apparatus, device, or the like. More specifically, it is sufficient that the "history generation unit (history generation means)" or the "reliability score calculation unit (reliability score calculation means)" described above is implemented in any one of the apparatuses included in the system.

In the flowcharts and sequence diagrams used in the above description, a plurality of steps (processes) are sequentially described. However, the order of the execution of the steps performed in the individual example embodiment is not limited to the described order. In the individual example embodiment, the order of the illustrated steps may be changed to the extent that a problem is not caused on the content of the individual example embodiment. For example, individual processes may be executed in parallel.

The above example embodiments have been described in detail to facilitate the understanding of the present application disclosed and not to mean that all the configurations described above are needed. In addition, if a plurality of example embodiments have been described, each of the example embodiments may be used individually or a plurality of example embodiments may be used in combination. For example, part of a configuration according to one example embodiment may be replaced by a configuration according to another example embodiment. For example, a configuration according to one example embodiment may be added to a configuration according to another example embodiment. In addition, addition, deletion, or replacement is possible between part of a configuration according to one example embodiment and another configuration.

The industrial applicability of the present invention has been made apparent by the above description. That is, the present invention is suitably applicable, for example, to an information processing system or the like including a service provider that provides a service to a user using a certificate stored in a digital wallet.

A part or the entirety of the example embodiments described above may be described as in the following supplementary notes, but is not limited to the followings.

### [Supplementary Note 1]

A terminal including:
a calculation means that calculates a reliability score, which is a score indicating a trust level of a user and for determining whether or not a service provider provides a service to the user; and
a transmission means that transmits the calculated reliability score to a business operator terminal of the service provider.

### [Supplementary Note 2]

The terminal according to supplementary note 1, further including a receiving means that receives a reliability score calculation rule for calculating the reliability score, and
wherein the calculation means calculates the reliability score based on the reliability score calculation rule and information related to digital contents held by the user.

### [Supplementary Note 3]

The terminal according to supplementary note 2, wherein the calculation means calculates the reliability score based on holding status of the digital contents stored in a digital wallet.

### [Supplementary Note 4]

The terminal according to supplementary note 2, wherein the calculation means calculates the reliability score based on a usage history of the digital contents stored in a digital wallet.

### [Supplementary Note 5]

The terminal according to supplementary note 2, wherein the calculation means calculates the reliability score based on a usage history of services provided using the digital contents stored in a digital wallet.

### [Supplementary Note 6]

A control method of a terminal, the control method including:
calculating a reliability score, which is a score indicating a trust level of a user and for determining whether or not a service provider provides a service to the user; and
transmitting the calculated reliability score to a business operator terminal of the service provider.

### [Supplementary Note 7]

A computer-readable storage medium storing a program causing a computer mounted on a terminal to perform processing for:
calculating a reliability score, which is a score indicating a trust level of a user and for determining whether or not a service provider provides a service to the user; and
transmitting the calculated reliability score to a business operator terminal of the service provider.

### [Supplementary Note 8]

A system including:
a terminal possessed by a user; and
a business operator terminal managed by a service provider, and
wherein the business operator terminal transmits to the terminal a reliability score calculation rule for calculating a reliability score, which is a score indicating a trust level of the user and is used for determining whether or not the service provider provides a service to the user, and
wherein the terminal calculates the reliability score of the user based on the received reliability score calculation rule and transmits the calculated reliability score to the business operator terminal, and
wherein the business operator terminal determines whether or not it is possible to provide the service to the user using the received reliability score, and notifies an employee of the service provider of a determination result.

### [Supplementary Note 9]

The system according to supplementary note 8, wherein
the business operator terminal requests the terminal to provide a document necessary for providing the service to the user in a case where it is determined that the service can be provided to the user, and
wherein the terminal, in response to a request, transmits digital contents specified by the business operator terminal, from among the digital contents stored in a digital wallet, to the business operator terminal.

### [Supplementary Note 10]

The system according to supplementary note 9, wherein the business operator terminal transmits details of the service provided to the user to the terminal.

The entire disclosure of the above patent literature is incorporated herein by reference thereto. While the example embodiments of the present invention have thus been described, the present invention is not limited to these example embodiments. It is to be understood to those skilled in the art that these example embodiments are only examples and that various variations are possible without departing from the scope and sprit of the present invention. That is, the present invention of course includes various variations and modifications that could be made by those skilled in the art in accordance with the overall disclosure including the claims and the technical concept.

### [Reference Signs List]

10 business operator terminal
20 terminal
100 terminal
101 calculation means
102 transmission means
201 communication control unit
202 digital wallet control unit
203 history generation unit
204 reliability score calculation unit
205 storage unit
301 communication control unit
302 calculation rule acquisition unit
303 service provision control unit
304 storage unit
311 processor
312 memory
313 input-output interface
314 communication interface

## Claims

1. A terminal comprising:
a calculation means that calculates a reliability score, which is a score indicating a trust level of a user and for determining whether or not a service provider provides a service to the user; and
a transmission means that transmits the calculated reliability score to a business operator terminal of the service provider.

2. The terminal according to claim 1, further comprising a receiving means that receives a reliability score calculation rule for calculating the reliability score, and
wherein the calculation means calculates the reliability score based on the reliability score calculation rule and information related to digital contents held by the user.

3. The terminal according to claim 2, wherein the calculation means calculates the reliability score based on holding status of the digital contents stored in a digital wallet.

4. The terminal according to claim 2, wherein the calculation means calculates the reliability score based on a usage history of the digital contents stored in a digital wallet.

5. The terminal according to claim 2, wherein the calculation means calculates the reliability score based on a usage history of services provided using the digital contents stored in a digital wallet.

6. A control method of a terminal, the control method comprising:
calculating a reliability score, which is a score indicating a trust level of a user and for determining whether or not a service provider provides a service to the user; and
transmitting the calculated reliability score to a business operator terminal of the service provider.

7. A computer-readable storage medium storing a program causing a computer mounted on a terminal to perform processing for:
calculating a reliability score, which is a score indicating a trust level of a user and for determining whether or not a service provider provides a service to the user; and
transmitting the calculated reliability score to a business operator terminal of the service provider.

8. A system comprising:
a terminal possessed by a user; and
a business operator terminal managed by a service provider, and
wherein the business operator terminal transmits to the terminal a reliability score calculation rule for calculating a reliability score, which is a score indicating a trust level of the user and is used for determining whether or not the service provider provides a service to the user, and
wherein the terminal calculates the reliability score of the user based on the received reliability score calculation rule and transmits the calculated reliability score to the business operator terminal, and
wherein the business operator terminal determines whether or not it is possible to provide the service to the user using the received reliability score, and notifies an employee of the service provider of a determination result.

9. The system according to claim 8, wherein
the business operator terminal requests the terminal to provide a document necessary for providing the service to the user in a case where it is determined that the service can be provided to the user, and
wherein the terminal, in response to a request, transmits digital contents specified by the business operator terminal, from among the digital contents stored in a digital wallet, to the business operator terminal.

10. The system according to claim 9, wherein the business operator terminal transmits details of the service provided to the user to the terminal.
